# EUROPEAN PATENT APPLICATION

(11) **EP 2 620 743 A1**
(43) Date of publication of application: **31.07.2013**
(21) Application number: 13152132.0
(22) Date of filing: 22.01.2013
(51) Int. Cl.: G01B 9/02

(54) **Multiwavelength interferometer**

(30) Priority: 26.01.2012 JP 2012013968
(71) Applicant: Canon Kabushiki Kaisha, Tokyo 146-8501 (JP)
(72) Inventor: Tokimitsu, Takumi, Tokyo 146-8501 (JP)
(74) Representative: TBK

(57) **Abstract**

A multiwavelength interferometer (200,300) includes a light beam splitter (8) that separates each of a plurality of light beams having wavelengths different from each other into measuring light and reference light, an interference signal generator (100) that generates an interference signal of interference light of the reference light and reflected light obtained by illuminating the measuring light on a surface (27) to be measured to be reflected on the surface for each wavelength, an illumination state changer (25) that changes an illumination state of the measuring light on the surface, a detector (222a, 222b) that detects the interference signal while the illumination state is changed, and a measurement unit (23) that measures a position of the surface using phases of a plurality of interference signals for each wavelength and intensity information of at least one interference signal of the plurality of interference signals.

## Description

### BACKGROUND OF THE INVENTION

### Field of the Invention

The present invention relates to a multiwavelength interferometer that measures a surface to be measured using light beams having a plurality of wavelengths different from each other.

### Description of the Related Art

Previously, a lightwave interferometer that measures a surface to be measured has been known. Japanese Patent Laid-Open No. H10-185529 discloses a single-wavelength heterodyne interferometer (a single-wavelength interferometer). However, in the single-wavelength interferometer, when the surface to be measured has a surface having a roughness (a rough surface), a speckle pattern generated due to the roughness of the surface has a random phase having a standard deviation larger than 2n, and therefore it is difficult to perform a precise measurement.

"Rough surface interferometry with a two-wavelength heterodyne speckle interferometer" (Applied Optics, Jul85,vol24,p2181) discloses a multiwavelength interferometer that combines phases of each wavelength based on a result of measuring the interference of the wavelengths different from each other to be able to perform a highly-accurate measurement even when the surface to be measured is a rough surface. "High-order statistical properties of speckle fields and their application rough-surface interferometry" U.Vry and F.Fercher, J.Opt.Soc.Am.A,3,7,988-1000(1986) discloses a fact that a correlativity of speckle patterns of two wavelengths depends on a combined wavelength A of the two wavelengths. The correlativity between the two wavelengths is reduced when the combined wavelength A is shorter, and the correlativity between the two wavelengths increases when the combined wavelength A is longer. The combined wavelength A is an amount that is represented as Λ=λ1×λ2/(λ1-λ2), where λ1 and λ2 (λ1>λ2) are the two wavelengths.

However, the correlativity of the speckle patterns between the two wavelengths depends on the roughness of the surface to be measured and an inclination of the surface to be measured, as well as the combined wavelength A. In other words, when the surface to be measured is rough, the correlativity of the speckle patterns between the two wavelengths is reduced. In addition, when the inclination of the surface to be measured is large, the correlation of the speckle patterns between the two wavelengths is reduced. Thus, even when the multiwavelength interferometer is used, it is difficult to perform a highly-accurate measurement for the rough surface since the correlativity between the two wavelengths is reduced.

### SUMMARY OF THE INVENTION

The present invention provides a multiwavelength interferometer capable of measuring a surface to be measured with high accuracy even when the surface to be measured is rough or inclined.

The present invention in its first aspect provides a multiwavelength interferometer as specified in claims 1 to 10.

Further features and aspects of the present invention will become apparent from the following description of exemplary embodiments with reference to the attached drawings.

### BRIEF DESCRIPTION OF THE DRAWINGS

FIG. 1 is a configuration diagram of a multiwavelength interferometer in Embodiment 1.

FIG. 2 is a diagram of describing the separation of light beams by a polarizing beam splitter in Embodiment 1.

FIGs. 3A to 3D are diagrams of illustrating speckle patterns in each wavelength in Embodiment 1.

FIG. 4 is a flowchart of illustrating a coordinate obtaining step by the multiwavelength interferometer in Embodiment 1.

FIGs. 5A and 5B are diagrams of a measurement error and an interference intensity product by the multiwavelength interferometer in Embodiment 1.

FIG. 6 is a configuration diagram of a multiwavelength interferometer in Embodiment 2.

### DESCRIPTION OF THE EMBODIMENTS

Exemplary embodiments of the present invention will be described below with reference to the accompanied drawings. In each of the drawings, the same elements will be denoted by the same reference numerals and the duplicate descriptions thereof will be omitted.

### [EMBODIMENT 1]

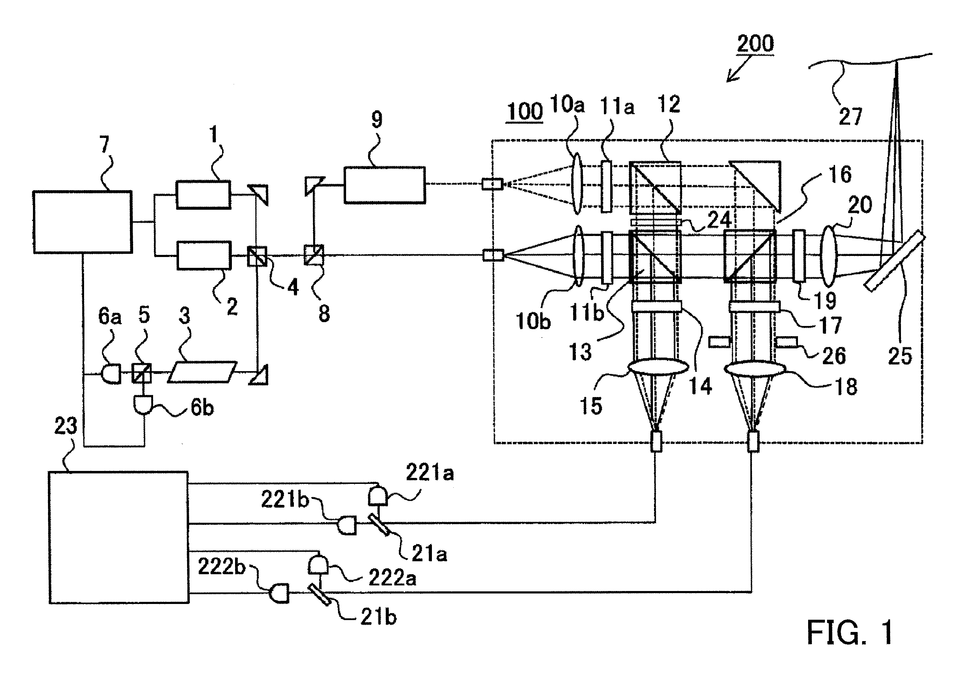

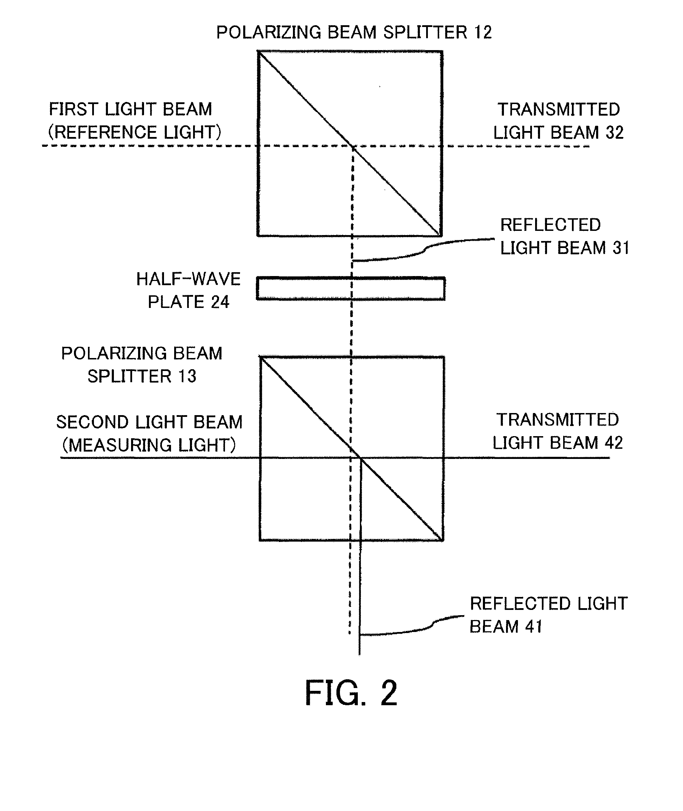

First of all, a multiwavelength interferometer (a lightwave interference measurement apparatus) in Embodiment 1 of the present invention will be described. FIG. 1 is a configuration diagram of a multiwavelength interferometer 200 in the present embodiment. FIG. 2 is a diagram of describing a light beam separation by a polarizing beam splitter in the present embodiment.

In the multiwavelength interferometer 200, reference numerals 1 and 2 denote fixed wavelength lasers and reference numeral 3 denotes a gas cell as a reference element of a wavelength. Reference numeral 8 denotes a polarizing beam splitter, which is a light beam splitting element (a light beam splitter) that separates each of a plurality of light beams having wavelengths different from each other (two light beams in the present embodiment) into measuring light and reference light. Reference numeral 9 denotes a wavelength shifter (a shift unit) that shifts each of the wavelengths of the reference light. Reference numeral 100 denotes an interferometer head. The interferometer head 100 is an interference signal generating unit (an interference signal generator) that generates an interference signal for each wavelength using reflected light that is obtained by illuminating the measuring light (signal light) on a measurement point on a surface 27 to be measured (an object surface) and the reference light.

Reference numeral 25 denotes a deflection unit (an illumination state changing unit, or an illumination state changer) that scans the measurement point on the surface 27 to be measured. The deflection unit 25 changes an illumination state of the measuring light illuminated on the surface 27 to be measured (an illumination position of the measuring light in the present embodiment). In the present embodiment, the surface 27 to be measured is a surface that has roughness (a rough surface), and the reflected light from the surface 27 to be measured is not necessarily regularly reflected light, and diffusely reflected light may also be applied. Reference numeral 23 denotes an analyzer (a measurement unit) that calculates a length measurement value based on an interference signal of the reference light and the measuring light that are obtained for each wavelength. The analyzer 23 is capable of obtaining (measuring) a coordinate of the measurement point (a position of the surface to be measured) using the illumination state (the illumination position) of the measurement light by the deflection unit 25 and the length measurement value. In such configurations, the multiwavelength interferometer 200 can obtain the position of the surface to be measured (a shape of the surface to be measured) by sequentially calculating the coordinate of the measurement point while moving the measurement point on the surface 27 to be measured using the deflection unit 25.

A light beam emitted from the fixed wavelength laser 1 is separated by a beam splitter 4. A light beam emitted from the fixed wavelength laser 2 enters the beam splitter 4, and its ray axis is the same as that of the light beam of the fixed wavelength laser 1 and the light beam is separated. The fixed wavelength laser 1 and the fixed wavelength laser 2 emit light beams having wavelengths different from each other. In the present embodiment, both the fixed wavelength laser 1 and the fixed wavelength laser 2 are configured by DFB semiconductor lasers similar to each other. However, the embodiment is not limited to this, and other lasers such as a HeNe laser may also be used. In the present embodiment, the fixed wavelength laser 1 and the fixed wavelength laser 2 are lasers having elements separated from each other. However, the embodiment is not limited to this, and similarly to a multiwavelength light source that is used for optical communications, a plurality of semiconductor lasers may also be configured so as to be integrated as one element. In this case, it is advantageous in views of cost and size.

One of the light beams separated by the beam splitter 4 transmits through the gas cell 3, and then is separated into a light beam of the fixed wavelength laser 1 and a light beam of the fixed wavelength laser 2 by a spectroscopic element 5. After each of the light beams transmits through the gas cell 3, a light intensity of the light beam from the fixed wavelength laser 1 is detected by a detector 6a and a light intensity of the light beam from the fixed wavelength laser 2 is detected by a detector 6b. A laser control unit 7 (a wavelength controller) performs a control so as to stabilize the wavelength of the light beam emitted from the fixed wavelength laser 1 to be a wavelength λ1 that is an absorption line of the gas cell 3 using an output signal from the detector 6a. The stabilization of the wavelength is, for example, performed by adjusting the wavelength of the light beam emitted from the fixed wavelength laser 1 using the laser control unit 7. As a wavelength adjusting method, for example, a method of modulating an injection current or a method of regulating temperature is used. Similarly, the laser control unit 7 performs a control so as to stabilize the wavelength of the light beam emitted from the fixed wavelength laser 2 to be a wavelength λ2 that is an absorption line of the gas cell 3 using an output signal from the detector 6b.

In the present embodiment, a wavelength precision is ensured using the gas cell 3, but an etalon may also be used instead of the gas cell 3. Alternatively, both the gas cell and etalon may also be used. In the present embodiment, the wavelengths λ1 and λ2 are set to be 1540nm and 1529nm respectively, and a combined wavelength A of the wavelengths λ1 and λ2 is set to be nearly 220µm. However, the embodiment is not limited to this, and these wavelengths can be arbitrarily set within a range where correlativity of speckle patterns is not lost.

The other light beam separated by the beam splitter 4 is separated by the polarizing beam splitter 8 into a first light beam (the reference light) and a second light beam (the measuring light). The first light beam enters the wavelength shifter 9. The wavelength shifter 9 applies a constant frequency shift using an acoustooptic element (not shown) for the light beams emitted from each of the fixed wavelength laser 1 and the fixed wavelength laser 2. The first light beam emitted from the wavelength shifter 9 enters the interferometer head 100. On the other hand, the second light beam separated by the polarizing beam splitter 8 enters the interferometer head 100 without passing through the wavelength shifter 9.

The first light beam (the reference light) entering the interferometer head 100 is changed to be a parallel light beam by a collimate lens 10a, and passes through a half-wave plate 11a (a λ/2 plate) and then is separated into a reflected light beam 31 and a transmitted light 32 by a polarizing beam splitter 12 as illustrated in FIG. 2. The reflected light 31 separated by the polarizing beam splitter 12 transmits through a half-wave plate 24 (a λ/2 plate) so as to rotate in a polarizing direction by 90 degrees. In addition, the reflected light beam 31 transmits through a polarizing beam splitter 13 and a polarizer 14, and further it is collected by a collecting lens 15 (a condenser lens) to enter the spectroscopic element 21a. The second light beam (the measuring light) entering the interferometer head 100 is changed to be a parallel light beam by a collimate lens 10b, and passes through a half-wave plate 11b (a λ/2 plate) and then is separated into a reflected light beam 41 and a transmitted light 42 by a polarizing beam splitter 13 as illustrated in FIG. 2. The reflected light 41 separated by the polarizing beam splitter 13 passes through the polarizer 14, and further it is collected by the collecting lens 15 to enter the spectroscopic element 21a.

In the present embodiment, a rotation direction with respect to an optical axis of the half-wave plate 11a is set so that a light intensity ratio of the reflected light beam 31 and the transmitted light beam 32 is a desired value. Similarly, a rotation direction with respect to an optical axis of the half-wave plate 11b is set so that a light intensity ratio of the reflected light beam 41 and the transmitted light beam 42 is a desired value. In this case, in order to maximize the contrast of the interference signal of the reflected light beam 31 and the reflected light beam 41, the light intensities of the reflected light beam 31 and the reflected light beam 41 are set to be nearly equal to each other.

The spectroscopic element 21a separates the light beam obtained from the fixed wavelength laser 1 and the light beam obtained from the fixed wavelength laser 2 that enter the spectroscopic element 21a on the same axis. A detector 221a detects a beat signal that corresponds to a frequency difference of both the light beams as an interference signal of the reflected light beam 31 and the reflected light beam 41 each having wavelength λ1 via the spectroscopic element 21a. A detector 221b detects a beat signal that corresponds to a frequency difference of both the light beams as an interference signal of the reflected light beam 31 and the reflected light beam 41 each having wavelength λ2. The detectors 221a and 221b extract polarization components common to the reflected light beam 31 and the reflected light beam 41 that are obtained via the polarizer 14 so as to detect the interference signals. Hereinafter, the interference signals detected by the detectors 221a and 221b via the spectroscopic element 21a are referred to as a reference signal.

On the other hand, the transmitted light beam 32 separated by the polarizing beam splitter 12 passes through a polarizing beam splitter 16 and a polarizer 17, and then enters the collecting lens 18. The transmitted light beam 42 separated by the polarizing beam splitter 13 transmits through the polarizing beam splitter 16, and then is changed to circularly-polarized light by a quarter-wave plate 19 (a λ/4 plate). Then, it is changed to a convergent light beam by an objective lens 20, and it is collected at the measurement point on the surface 27 to be measured via the deflection unit 25. Furthermore, it is reflected at the measurement point so as to be changed to circularly- polarized light in a reverse direction, and then transmits through the quarter-wave plate 19 via the deflection unit 25 again. As a result, it is changed to linearly-polarized light in which a polarization plane is rotated by 90 degrees with respect to the plane at the time of entrance, and enters the polarizing beam splitter 16 again. Then, it is reflected on the polarizing beam splitter 16, and passes through the polarizer 17 and a stop 26 so as to enter the collecting lens 18. In the present embodiment, the deflection unit 25 is a galvano mirror that has a function of moving a position of the measurement point on the surface 27 to be measured by deflecting the light beam and a function of transferring deflection information to the analyzer 23.

Hereinafter, the transmitted light 32 separated by the polarizing beam splitter 12 is referred to as a reference light beam, and light that is reflected on the surface 27 to be measured is referred to as a measuring light beam (a light beam to be measured). The interference signal of the reference light beam and the measuring light beam having the wavelength λ1 that enters the spectroscopic element 21b is detected by a detector 222a. The interference signal of the reference light beam and the measuring light beam having the wavelength λ2 is detected by a detector 222b. Thus, the detectors 222a and 222b are a detector that detects the interference signal while the illumination state is changed. Hereinafter, the interference signals detected by the detectors 222a and 222b via the spectroscopic element 21b are referred to as a measurement signal. The measurement signal, as an interference signal of the transmitted light beam 32 and the transmitted light beam 42, has a point at which a beat signal corresponding to a frequency difference of both the light beams is obtained, which is the same point as the reference signal. However, in accordance with optical path lengths of the measuring light beam and the reference light beam and a roughness state of the measurement point, a phase of the interference signal is different from a phase of the reference signal. The phase of the measurement signal is a different from the phase of the reference signal.

In the present embodiment, since the two light beams having the wavelengths λ1 and λ2 are used, the optical path length difference of the measuring light beam and the reference light beam can be measured using a phase difference between the wavelengths even at the measurement point on the surface 27 to be measured that has a roughness. In the present embodiment, a configuration in which the spectroscopic elements 21a and 21b are used to be separated into signals for each wavelength is adopted, but the embodiment is not limited to this. For example, frequency shift amounts different from each other may be given to the reference lights having the wavelengths λ1 and λ2 and the interference signal detected by the detector (a phase detector) may be separated in accordance with the frequency so as to be separated into the interference signals for each wavelength. In this case, the spectroscopic element is not necessary and therefore the multiwavelength interferometer can be easily configured.

The analyzer 23 includes a coordinate processor that calculates a coordinate on the surface 27 to be measured using intensity information of the measurement signal (the interference signal) and a phase of the measurement signal (phase information) while the measurement point is moved. In such a configuration, the coordinate of the surface to be measured can be obtained with high accuracy even when the correlativity of the speckles between the plurality of wavelengths is small.

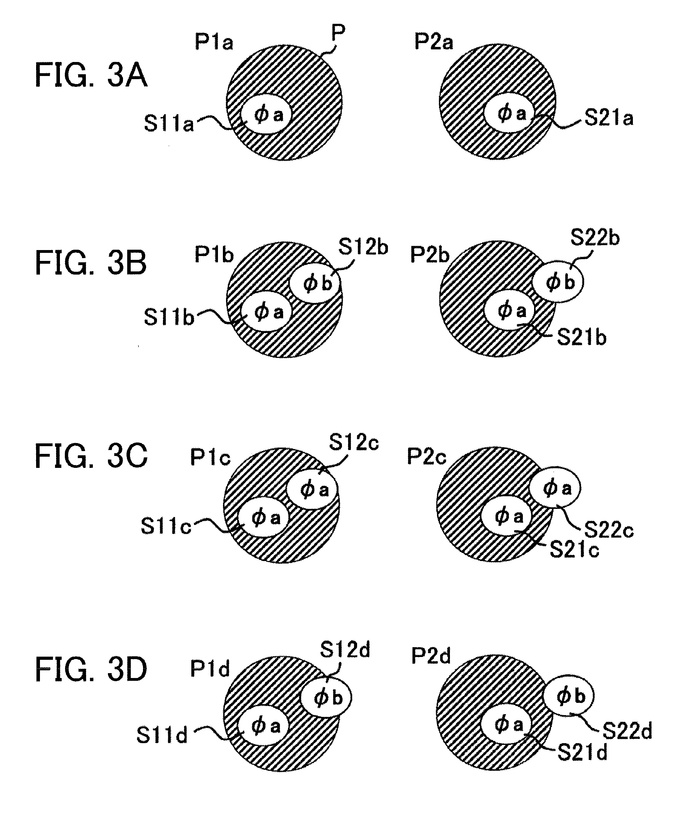

Next, referring to FIGs. 3A to 3D, a basic concept in the present embodiment will be described. FIGs. 3A to 3D are diagrams of illustrating the speckle patterns for each wavelength. As described above, when the measuring light beam is collected at the measurement point so as to be reflected and scattered, a speckle pattern is formed in a Fourier transform plane. Speckle patterns P1a, P1b, P1c, and P1d illustrated in FIGs. 3A to 3D respectively are simplified speckle patterns that are obtained when the measuring light beam having the wavelength λ1 is illuminated on the measurement points different from each other. Speckle patterns P2a, P2b, P2c, and P2d are speckle patterns that are obtained when the measuring light beam having the wavelength λ2 is illuminated at the same time.

The speckle patterns P2a, P2b, P2c, and P2d have distributions that are shifted from the speckle patterns P1a, P1b, P1c, and P1d in accordance with an illumination angle. Since these speckle patterns are determined in accordance with a micro shape in an illumination and collection diameter at the measurement point, it is difficult to predict what kind of spackle pattern is generated at the measurement time. In each of the speckle patterns, an effective area P is limited by the stop 26. The measurement signal corresponds to a signal that passes through the effective area P of the spackle pattern. The speckle pattern is roughly separated into a bright section and a dark section. It is known that an average size of the bright section of the speckle pattern is determined in accordance with an illumination and collection diameter on a rough surface, a wavelength, and a focal length of the objective lens 20. The effective area P is, in view of obtaining sufficient interference intensity, set to be one to five times as large as the average size of the bright section.

As illustrated in FIG. 3A, the speckle pattern P1a includes a bright section S11a inside the effective area P, and the speckle pattern P2a includes a bright section S21a inside the effective area P. Each of phases of the bright sections S11a and S21a is ϕa. Each of phases illustrated in FIGs. 3A to 3D corresponds to a component (a rough surface derivation component) that is derived from a rough surface (a surface to be measured) that is obtained by deducting a component caused by the optical path length difference. When the speckle pattern P1a illustrated in FIG. 3A is observed, the rough surface derivation component of the phase difference between the wavelengths is 0 (zero), and therefore the coordinate of the measuring point can be measured without errors.

The speckle pattern P1b illustrated in FIG. 3B includes a bright section S11b having a phase ϕa and a bright section S12b having a phase ϕb. The speckle pattern P2b includes a bright section S21b having a phase ϕa and a bright section S22b having a phase ϕb, but not all the bright sections can be detected since a part of the bright section S22b is out of the effective area P. Accordingly, when the speckle pattern of FIG. 3B is observed, the phase difference between the wavelengths is not 0 (zero), and an error is generated on the measured coordinate. When the speckle patterns P1b and P2b illustrated in FIG. 3B are observed, the interference intensity is decreased since the phases ϕa and ϕb at the plurality of bright sections S11b, S12b, S21b, and S22b are canceled each other.

The speckle patterns P1c and P2c illustrated in FIG. 3C include a plurality of bright sections S11c, S12c, S21c, and S22c, and the measurement error is small and the interference signal is increased since the phase ϕa of the plurality of bright sections is the same although a part of the bright section S22c is out of the effective area P. In a speckle pattern P1d illustrated in FIG. 3D, the interference intensity is decreased since the phases ϕa and ϕb at the plurality of bright sections S11d and S12d are canceled each other. On the other hand, in a speckle pattern P2d, the interference intensity is increased since a part of the bright section S22d of the plurality of bright sections S21d and S22d is out of the effective area P.

Thus, when the rough surface on which the speckle pattern is generated is measured, the measurement error caused by the rough surface is statistically small if the interference intensity is large. On the other hand, if the interference intensity is small, the measurement error is large. In addition, even when one of the two interference intensities of the wavelengths is small, the measurement error is statistically large. Accordingly, if the coordinate at the measurement point is obtained only when both the two interference intensities of the wavelengths are not less than a predetermined threshold value, the statistical measurement error can be reduced.

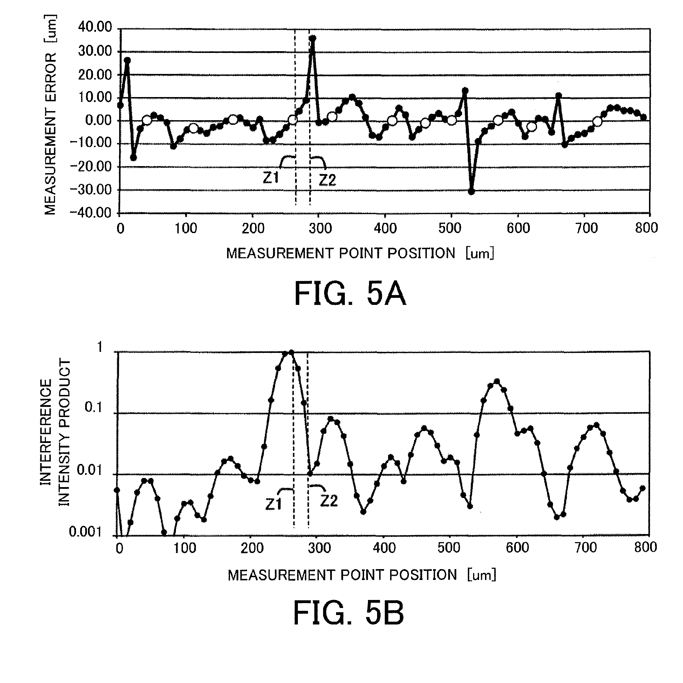

The analyzer 23 obtains the interference intensity obtained while the measurement point on the surface 27 to be measured is continuously changed using the deflection unit 25, and then obtains only the coordinate when the interference intensity indicates a local maximum value so as to realize an interference measurement in which the error is reduced. When the interference measurement is performed while the measurement point on the surface to be measured is continuously changed, the speckle pattern is continuously changed if a moving amount (a displacement) of the measurement point at measurement intervals is sufficiently smaller than the illumination and collection diameter. Therefore, obtaining the coordinate where the interference intensity indicates the local maximum value, for example compared to a configuration where a coordinate is obtained when the interference intensity indicates a value not less than a predetermined threshold value, the coordinate data can be obtained more uniformly. The details will be described below with reference to FIGs. 5A and 5B.

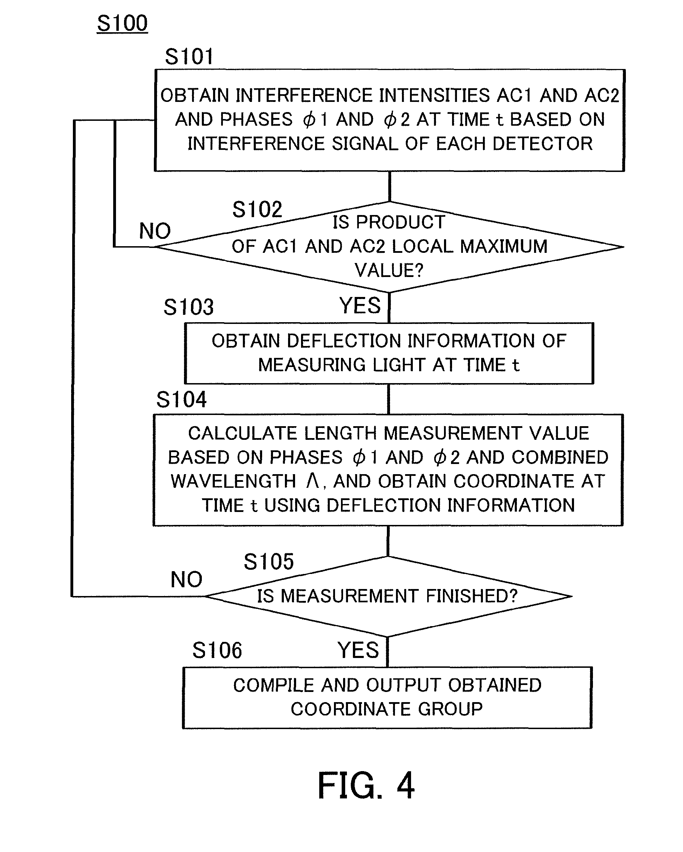

Next, referring to FIG. 4, a coordinate obtaining step of the surface 27 to be measured by the multiwavelength interferometer 200 (the analyzer 23) in the present embodiment will be described. FIG. 4 is a flowchart of illustrating a coordinate obtaining step S100 of the surface 27 to be measured by the analyzer 23. Obtaining the coordinate by the analyzer 23 in the coordinate obtaining step S100 is performed while the measurement point on the surface 27 to be measured is changed (moved) by the deflection unit 25.

First of all, in Step S101, interference intensities AC1 and AC2 and phases ϕ1 and ϕ2 (phase information) of each of the measurement signals having two wavelengths λ1 and λ2 at a time t that are detected by the detectors 222a and 222b are obtained. Subsequently, in Step S102, it is determined whether a product (an intensity product) of the interference intensities AC1 and AC2 obtained in Step S101 indicates a local maximum value (a maximum value). When the intensity product indicates the local maximum value, the flow proceeds to Step S103. On the other hand, when the intensity product does not indicate the local maximum value, the flow returns to Step S101 and the determination of Step S102 is repeated until the intensity product indicates the local maximum value.

Next, in Step S103, deflection information of the deflection unit 25 at the time t at which the product of the interference intensities AC1 and AC2 (the intensity product) indicate the local maximum value is obtained. Subsequently, in Step S104, a length measurement value is calculated using the phases ϕ1 and ϕ2 (the phase information) obtained in Step S101 and a combined wavelength Λ. Then, the coordinate of the measurement point at the time t is obtained using the deflection information obtained in Step S103. Subsequently, in Step S105, it is determined whether the measurement is finished. When the measurement is not finished, the flow returns to Step S101 and Steps S101 to S104 are repeated. On the other hand, when the measurement is finished, the flow proceeds to Step S106 and the obtained coordinate group is compiled and outputted.

FIGs. 5A and 5B are diagrams of illustrating a measurement error by the multiwavelength interferometer 200 and an interference intensity product (the intensity product), respectively, which are experimental results of indicating an effect of reducing the measurement error when the coordinate obtaining step S100 of FIG. 4 is used. In FIG. 5A, a vertical axis indicates the measurement error, and a lateral axis indicates a measurement point position. In FIG. 5B, a vertical axis indicates the interference intensity product, and a lateral axis indicates the measurement point position.

The surface to be measured that is used in this experiment is a plane sample having a rough surface for which a grinding process of a surface roughness Ra of 0.4µm has been performed, and the measurement is performed within a range of 800µm at intervals of 10µm while the measurement point is moved at an illumination angle of 15 degrees. An experimental condition is that the wavelength λ1 is 1540nm, the wavelength λ2 is 1529nm, the combined wavelength Λ is 220µm, the focal length of the collecting lens is 150mm, the illumination and collection diameter is 100µm, and the effective area of the light beam is ϕ6mm. In the experiment, as a moving unit that moves the measurement point, a one-axis stage that holds the sample is used, which is substantially equivalent to the movement of the measurement point by the deflection unit 25 illustrated in FIG. 1.

FIG. 5A is the measurement error in an optical axis direction at the measurement point position when a measurement start point is set to 0 (zero), and the vertical axis indicates the measurement error and the lateral axis indicates the measurement point position. FIG. 5B is a product of the interference intensity of the wavelength λ1 and the interference intensity of the wavelength λ2 (the interference intensity product) when the measurement start point is set to 0, and the vertical axis indicates the interference intensity product and the lateral axis indicates the measurement point position. In FIG. 5B, the maximum value of the interference intensity product is normalized to be 1. White plots in FIG. 5A indicate measurement error differences at the measurement point positions where the interference intensity product of FIG. 5B indicates the local maximum value, which are measurement points obtained in the coordinate obtaining step S100 of FIG. 4. As illustrated in FIGs. 5A and 5B, a standard deviation of the measurement errors obtained when the interference intensity product indicates the local maximum value is 1.5µm, which is significantly improved compared to a standard deviation of 8.1µm of measurement errors at all measurement points.

According to the measurement result of FIGs. 5A and 5B, in obtaining the coordinate, using the local maximum value of the interference intensity (the intensity product) is more effective than setting a threshold value to the interference intensity to select a measurement point. First, the measurement error can be reduced. When the threshold value is provided, for example at a measurement point Z2 near a measurement point Z1 indicating the interference intensity is maximized in FIG. 5B, in spite of indicating that the interference intensity is sufficiently large compared to those at other areas the measurement error is around 10µm, which is large. This is because of the following reason. In other words, when the moving amount of the measurement point is sufficiently small compared to the illumination and collection diameter, the speckle pattern is continuously changed. Therefore, when the interference intensity is increased or decreased even at a measurement point where broad interference intensity is large, the interference intensities are cancelled each other in a light beam effective area, and therefore the measurement error is not sufficiently reduced.

Second, the measurement point can be obtained more uniformly. When the threshold value is provided, the coordinates of the measurement point which are obtained are concentrated near a point where the interference intensity near the measurement point Z1 is large. On the other hand, when the local maximum value is used, the coordinates of the measurement point can be obtained more uniformly at intervals of around the same as the illumination and collection diameter. In many cases, measurement resolution of the measurement coordinate in a direction vertical to the optical axis only needs to be able to obtain resolution equivalent to the illumination and collection diameter, and in the present embodiment, the measurement can be performed at sufficient intervals. When the surface to be measured has a large curvature, the change of the broad interference intensity is large since the change of the illumination angle caused by the movement of the measurement point, and it is difficult to uniformize an effective measurement point when the threshold value is provided. For the reasons above, the coordinate can be obtained when using the local maximum value more effectively than when setting the threshold value to the interference intensity to select the measurement point.

Thus, in the present embodiment, the analyzer 23 measures the position (the coordinate) of the surface 27 to be measured using the phases of the plurality of interference signals for each wavelength and the intensity information of at least one interference signal of the plurality of interference signals. In the present embodiment, the local maximum value of the intensity product of the plurality of interference signals is adopted as the intensity information, but the embodiment is not limited to this. As the intensity information, for example the local maximum value of the intensity of at least one interference signal of the plurality of interference signals may also be used. Alternatively, as the intensity information, information indicating that the intensity of at least one interference signal exceeds a predetermined threshold value can also be adopted.

Furthermore, as the intensity information, information obtained by combining them can also be used. In this case, the intensity information is both the local maximum value of the intensity of one interference signal and information indicating that the intensity of at least one interference signal exceeds the predetermined threshold value. Alternatively, the intensity information may be both the local maximum value of the intensity product of the plurality of interference signals and the information indicating that the intensity of at least one interference signal exceeds the predetermined threshold value.

### [EMBODIMENT 2]

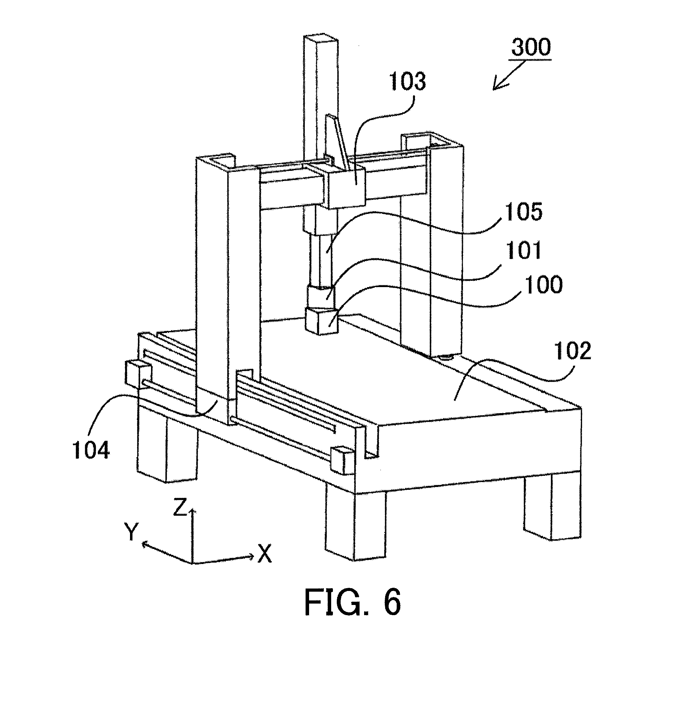

Next, referring to FIG. 6, a multiwavelength interferometer in Embodiment 2 of the present invention will be described. FIG. 6 is a configuration diagram of a multiwavelength interferometer 300 in the present embodiment. The multiwavelength interferometer 300 is an apparatus that is configured to be able to obtain a coordinate of a surface of an object (a surface to be measured) that is placed on a stage 102 using measuring light illuminated from the interferometer head 100.

In the present embodiment, the interferometer head 100 illustrated in FIG. 6 has a configuration similar to that of the interferometer head of Embodiment 1. A head rotating driver 101, an X-axis driver 103, a Y-axis driver 104, and a Z-axis driver 105, as well as the deflection unit 25 (FIG. 1), configure a deflection unit (a deflection portion) that changes an illumination state of the measuring light illuminated on the surface to be measured. The multiwavelength interferometer 300 includes the deflection unit, and therefore it can select an arbitrary position and inclination with respect to the surface to be measured.

In the present embodiment, using the coordinate obtaining step S100 of FIG. 4, a highly-accurate measurement can be performed similarly to Embodiment 1, and also a more complicated surface (the surface to be measured) can be measured. In the coordinate obtaining step S100, the interference intensity obtained while moving the measurement point on the surface to be measured is used, and alternatively, in the multiwavelength interferometer 300 of the present embodiment, the measurement point on the surface to be measured is fixed and the interference intensity obtained when changing the illumination condition can be used.

In the present embodiment, using the head rotating driver 101, the X-axis driver 103, the Y-axis driver 104, the Z-axis driver 105, and the deflection unit 25, the position and the inclination of the interferometer head 100 are changed. In such a configuration, changing an illumination direction (the illumination state) of the measuring light while the measurement point is fixed, the measurement at the measurement point where the interference intensity indicates the local maximum value can be performed. In this case, the interval of changing the illumination direction is set to be decreased to the extent that the interference intensity is continuously changed, and therefore an effect of improving the accuracy that is similar to the coordinate obtaining step S100 can be obtained. Since the position of the measurement point can be arbitrarily selected, a coordinate of a desired measurement point can be obtained.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

For example, in each of the embodiments described above, a heterodyne interferometer is described, but the embodiment can also be applied to other interferometers such as a multiwavelength homodyne interferometer. Even when the multiwavelength homodyne interferometer is applied, detecting the interference intensity (the intensity product) and the phase of each wavelength, a highly-accurate measurement of a surface to be measured (a rough surface) can be performed using a flowchart similar to the coordinate obtaining step S100. In each of the embodiments described above, the two-wavelength interferometer is described as the multiwavelength interferometer, but the embodiment is not limited to this. Each embodiment can also be applied to a multiwavelength interferometer that uses light beams having three or more wavelengths different from each other. Each embodiment may also be applied to a multiwavelength scanning interferometer that is capable of performing an absolute length measurement by scanning one of a plurality of wavelengths.

In each embodiment, for example the interferometer is configured so as to obtain the coordinate of the measurement point at which the interference intensity indicates the local maximum value, but alternatively, the interferometer may obtain a representative coordinate value by a weighted average based on the interference intensity using coordinate values of a plurality of adjacent measurement points. In this case, the analyzer 23 calculates the weighted average of the intensity products of the plurality of interference signals, or alternatively, calculates the weighted average of the intensities of one interference signal. The calculated weighted average of the intensity products or the intensities is the intensity information described above. In such a configuration, since a large weighted amount is added to a measurement point where the interference intensity is large and the measurement error is statistically small, a highly-accurate measurement can be performed. However, in views of the decrease of the resolution in the direction perpendicular to the optical axis and the limitation of the averaging effect within a local range, it is preferred that the size on the surface to be measured where the plurality of adjacent measurement points occupy be limited to an appropriate range.

In each embodiment, the interference intensity when the illumination condition of the measuring light is changed, i.e. when the measurement point (the position) on the surface to be measured is moved, is used, but alternatively the interferometer may also be configured so as to feed back the interference intensity to the illumination condition. For example, the measurement point is moved so that the interference intensity indicates the local maximum value, and the coordinate may be obtained after the position where the interference intensity indicates the local maximum value is searched.

According to each of the embodiments described above, even when a surface to be measured is rough or inclined, i.e. the correlativity of speckles between a plurality of wavelengths is small, a multiwavelength interferometer capable of measuring the surface to be measured with high accuracy can be provided.
A multiwavelength interferometer (200,300) includes a light beam splitter (8) that separates each of a plurality of light beams having wavelengths different from each other into measuring light and reference light, an interference signal generator (100) that generates an interference signal of interference light of the reference light and reflected light obtained by illuminating the measuring light on a surface (27) to be measured to be reflected on the surface for each wavelength, an illumination state changer (25) that changes an illumination state of the measuring light on the surface, a detector (222a, 222b) that detects the interference signal while the illumination state is changed, and a measurement unit (23) that measures a position of the surface using phases of a plurality of interference signals for each wavelength and intensity information of at least one interference signal of the plurality of interference signals.

## Claims

1. A multiwavelength interferometer (200,300) comprising:
a light beam splitter (8) configured to separate each of a plurality of light beams having wavelengths different from each other into measuring light and reference light;
an interference signal generator (100) configured to generate an interference signal of interference light of the reference light and reflected light that is obtained by illuminating the measuring light on a surface (27) to be measured to be reflected on the surface to be measured for each wavelength;
an illumination state changer (25) configured to change an illumination state of the measuring light on the surface to be measured;
a detector (222a, 222b) configured to detect the interference signal while the illumination state is changed; and
a measurement unit (23) configured to measure a position of the surface to be measured using phases of a plurality of interference signals for each wavelength and intensity information of at least one interference signal of the plurality of interference signals.

2. The multiwavelength interferometer according to claim 1, **characterized in that** the intensity information is a local maximum value of an intensity of the one interference signal.

3. The multiwavelength interferometer according to claim 1, **characterized in that** the intensity information is a local maximum value of an intensity product of the plurality of interference signals.

4. The multiwavelength interferometer according to claim 1, **characterized in that** the intensity information is information indicating that an intensity of the at least one interference signal exceeds a predetermined threshold value.

5. The multiwavelength interferometer according to claim 1, **characterized in that** the intensity information is both of a local maximum value of an intensity of the one interference signal and information indicating that an intensity of the at least one interference signal exceeds a predetermined threshold value.

6. The multiwavelength interferometer according to claim 1, **characterized in that** the intensity information is both a local maximum value of an intensity product of the plurality of interference signals and information indicating that an intensity of the at least one interference signal exceeds a predetermined threshold value.

7. The multiwavelength interferometer according to claim 1,
**characterized in that**
the measurement unit calculates a weighted average of intensities of the one interference signal, and
the intensity information is the weighted average of the intensities.

8. The multiwavelength interferometer according to claim 1,
**characterized in that**
the measurement unit calculates a weighted average of intensity products of the plurality of interference signals, and
the intensity information is the weighted average of the intensity products.

9. The multiwavelength interferometer according to any one of claims 1 to 8, **characterized in that** the illumination state is an illumination position of the measuring light on the surface to be measured.

10. The multiwavelength interferometer according to any one of claims 1 to 9, wherein the illumination state is an illumination direction of the measuring light on the surface to be measured.
